# EUROPEAN PATENT APPLICATION

(11) **EP 3 514 738 A1**
(43) Date of publication of application: **24.07.2019**
(21) Application number: 19152968.4
(22) Date of filing: 22.01.2019
(51) Int. Cl.: G06Q 10/00

(54) **DEMAND PREDICTION APPARATUS, REDISTRIBUTION PLAN GENERATION APPARATUS, USER MODEL GENERATION APPARATUS**

(30) Priority: 23.01.2018 JP 2018009052
(71) Applicant: TOYOTA JIDOSHA KABUSHIKI KAISHA, Toyota-shi, Aichi 471 8571 (JP)
(72) Inventor: KUWAHARA, Masahiro, Minato-ku,, Tokyo 107-0052 (JP)
(74) Representative: TBK

(57) **Abstract**

A demand prediction apparatus configured to predict a demand in a mobility service, comprises a history acquirer configured to acquire a search history including a condition of a search, which includes a place of departure and a destination, and a time at which the search has been performed; a first estimator configured to estimate at least one of a departure area or a destination area of a travel; a second estimator configured to estimate a beginning time of the travel on the basis of the search history and a user model that defines a difference between the time at which the search has been performed and an actual beginning time of the travel; and a demand predictor configured to predict that the user makes travel specified by the departure area or the destination area estimated by the first estimator at the beginning time of the travel estimated by the second estimator.

## Description

### BACKGROUND

### Technical Field

The present invention relates to demand prediction in an on-demand type mobility service, and particularly to demand prediction based on a search history of a user. The present invention also relates to redistribution plan generation based on the demand prediction, and user model generation used in the demand prediction.

### Description of the Related Art

In recent years, an on-demand type mobility service has become popular. The on-demand type mobility service is a service that provides travel means the operation of which can be changed in accordance with a request from a user. For example, there is a one-way type (drop-off type) car sharing system. In the car sharing system as above, the location of a shared car can be changed in accordance with the demand from the user. As a result, it can be expected that the request from the user is answered as much as possible.

In the on-demand type mobility service as above, a travel demand from the user is desired to be properly predicted. Japanese Patent Application Laid-open No. 2015-026136 indicates that, on the basis of a search performance relating to travel of which time that is searched is in the past, a past travel performance relating to the travel, and a search performance relating to travel of which time that is searched is in the future, a future travel performance relating to the travel is predicted.

Specifically, the travel demand for moving from a spot A to a spot B in the future is predicted in accordance with the number of searches relating to the travel from the spot A to the spot B at a future time point. That is, Japanese Patent Application Laid-open No. 2015-026136 indicates that the future demand is predicted on the basis of the search also for the future by focusing on a feature in which there is correlation between the search and the actual travel.

### SUMMARY

The abovementioned approach predicts the demand in accordance with the number of searches, and hence can be said to predict the entire demand for each travel. However, in some on-demand type mobility services, the total demand amount is not large, and the use varies widely. In those services, the approach of predicting the entire demand as described above lacks accuracy.

In view of the abovementioned problem, an object of the present invention is to accurately acquire a future demand in an on-demand type mobility service. The present invention also has an object to optimally place a travel resource in the mobility service on the basis of the demand prediction as above, and to generate a user model used in the demand prediction as above.

A first aspect of the present invention is a demand prediction apparatus that predicts a demand for travel in a mobility service. The demand prediction apparatus according to this aspect predicts a travel demand for each user on the basis of a search history for each user. By predicting the demand for each user as described above, the prediction accuracy can be enhanced even when the use tendencies vary as a whole.

The demand prediction apparatus according to this aspect includes a history acquirer, a first estimator, a second estimator, and a demand predictor.

The history acquirer acquires a history of the search performed by the user. The history of the search includes a search condition including a place of departure and a destination, and the time at which the search has been performed.

The first estimator estimates, from the search history, at least one of a departure area or a destination area of the travel desired by the user. The departure area may be the same geographical scope as the place of departure or may be a geographical scope wider than the place of departure that includes the place of departure. Similarly, the destination area may be the same geographical scope as the destination or may be a geographical scope wider than the destination. For example, the first estimator may estimate the departure area or the destination area of the travel desired by the user on the basis of a weighed number of times the place of departure and the destination are designated in a chronological sequence of searches. This is because a search performed earlier in the series of searches is conceived to be more in accordance with the request from the user.

The second estimator estimates a beginning time of the travel desired by the user on the basis of the search history and a user model. The user model herein defines a difference between a time at which the search has been performed and an actual beginning time of the travel. The user model does not necessarily need to specifically define when to begin using after the search, and may define the probability of the beginning of using for each elapsed time after the search. The user model may be defined for each user or may be defined for each user group.

For example, the second estimator may perform the abovementioned estimation with use of the user model defined for each user. In that case, the demand prediction apparatus according to this aspect may further include: a storage unit configured to store a plurality of the user models in association with the user; and a user model selector configured to select one of the user models associated with the user. The second estimator estimates the beginning time of the travel desired by the user with use of the user model selected by the user model selector.

Alternatively, the second estimator may perform the abovementioned estimation with use of the user model defined for each user group. In that case, the demand prediction apparatus according to this aspect may further include: a storage unit configured to store a plurality of the user models in association with a user group; and a user model selector configured to determine a user group corresponding to the user on the basis of at least one of an attribute, a search history, or a use performance of the user, and select one of the user models associated with the user group. The user group only needs to be determined in accordance with a classification criterion set in advance. The second estimator estimates the beginning time of the travel desired by the user with use of the user model selected by the user model selector.

The second estimator may select a predetermined user model (for example, a default user model) when the frequency of use of the user is lower than a threshold value. The second estimator may select a user model corresponding to the user by also taking into consideration information other than the search history and the use performance, for example, a meteorological condition at the time of the search or use, a combination of the departure area and the destination area, and the time at which the search is executed (the time zone, the day of week, and the like).

The demand predictor predicts that the user performs travel specified by the departure area or the destination area estimated by the first estimator at the beginning time of the travel estimated by the second estimator. The demand predictor transmits the prediction result to other modules or outputs the prediction result on a screen.

As described above, the demand prediction apparatus according to this aspect predicts the travel demand from a user on the basis of the search performed by the user. As described above, the prediction of the demand can be performed in units of users, and hence demand prediction with high accuracy becomes possible.

The demand prediction apparatus according to this aspect may include a updater configured to acquire a plurality of search histories and use performances and updating at least one of the plurality of user models stored in the storage unit. By updating the user models on the basis of new information as described above, demand prediction with higher accuracy can be performed.

A second aspect of the present invention includes: the abovementioned demand prediction apparatus; and a plan generator configured to generate a redistribution plan for relocating a travel resource on the basis of a demand predicted by the demand prediction apparatus, a location of the travel resource in the mobility service, and a current redistribution plan. The redistribution plan may be any type of plan as long as the plan serves as a criterion for determining the movement of the travel resource. For example, the redistribution plan may be a command specifically indicating when, where from, and where to the travel resource is to be transported, or may be a rule to transport the travel resource from a location to another location when a particular condition is met. The redistribution plan can be carried out by performing optimized calculation through linear programming or simulation, for example.

For example, the redistribution plan generation apparatus according to this aspect may generate one or a plurality of redistribution requests on the basis of the demand predicted by the demand prediction apparatus, the location of the travel resource in the mobility service, and the current redistribution plan. The redistribution plan generation apparatus according to this aspect may generate the redistribution plan by (1) adding, to a new redistribution plan, a redistribution request that is executable without conflicting with other requests out of the one or a plurality of redistribution requests, and (2) selecting, for redistribution requests that conflict with other requests out of the one or a plurality of redistribution requests, an optimal redistribution request on the basis of a predetermined criterion, and adding the optimal redistribution request to the new redistribution plan.

A third aspect of the present invention is a user model generation apparatus that generates a user model for performing the demand prediction of the mobility service. The user model generation apparatus according to this aspect includes a history acquirer, a performance acquirer, and a generator.

The history acquirer acquires a history of the search in the mobility service performed by the user. The history of the search includes the time at which the search has been performed. The performance acquirer acquires a use performance of the user in the mobility service. The use performance include the time at which the user has begun using the travel resource. The history acquirer may acquire the search history and the use performance for a plurality of the users.

The user model generator generates a user model that defines a time from when the user performs the search to when the user begins using the mobility service on the basis of the search history and the use performance described above. The user model can be generated through an approach of machine learning, for example. Information other than the search history and the use performance, for example, the meteorological situation, a combination of the departure area and the destination area, and the time zone in which the search is executed may be used in the generation of the user model.

The user model generator may generate the user model in units of users or may generate the user model in units of user groups including a plurality of the users. The user model generator may generate a plurality of user models for one user or one user group.

When the user model is generated in units of users, the user model generator according to this aspect only needs to generate the user model for each user on the basis of the search history and the use performance of the user. Meanwhile, when the user model is generated in units of user groups, the user model generator according to this aspect generates the user model as follows. That is, the user model generator generates a user model for each user group by generating a provisional user model for each of the users on the basis of the search history and the use performance of the user and aggregating users having similar provisional user models into a user group. At this time, the user model generator also generates a classification criterion for the user group.

The user model generator may generate one user model on the basis of the search history and the use performance of a plurality of users of whom frequency of use is lower than a threshold value. The user model generated as described above can be used as a user model for users of whom frequency of use is low. When the use aspect is different in accordance with the meteorological condition at the time of the search or use, a combination of the departure area and the destination area, the time at which the search is executed (the time zone, the day of week, and the like), and the like for the same user, the user model generator may generate a user model for each of the conditions above.

The user model generation apparatus according to this aspect may further include a updater configured to update a user model on the basis of the search history and the use performance that are not used when the user model is generated, that is, a new search history and a new use performance. For example, an existing user model can be updated on the basis of a search and use performed after the user model generation.

The present invention can be regarded as a demand prediction apparatus, a redistribution plan generation apparatus, or a user model generation apparatus including at least a part of the abovementioned means. The present invention can also be regarded as a demand prediction method performed by the demand prediction apparatus, a redistribution plan generation method performed by the redistribution plan generation apparatus, or a user model generation method performed by the user model generation apparatus. The present invention can also be regarded as a computer program that causes a computer to execute those methods, or a computer-readable storage medium on which the computer program is stored in a non-transitory manner. The present invention can be configured by combining the abovementioned means and processing as much as possible.

According to the present invention, the future demand in the on-demand type mobility service can be accurately acquired. Further, according to the present invention, the travel resource in the mobility service can be optimally placed on the basis of the demand prediction as above. Further, according to the present invention, the user model used for the demand prediction can be generated.

### BRIEF DESCRIPTION OF THE DRAWINGS

FIG. 1 is a diagram illustrating the configuration of a redistribution plan generation apparatus according to an embodiment;
FIG. 2 is a diagram showing an example of search history data;
FIG. 3 is a diagram showing an example of use performance data;
FIG. 4 is a flowchart illustrating the flow of user model generation processing;
FIG. 5 is a diagram showing an example of a user model to be generated;
FIG. 6 is a flowchart illustrating the flow of demand prediction processing;
FIG. 7A and FIG. 7B are respectively a diagram of an example of the search history data and a diagram illustrating the prediction of a place of departure and a destination of the travel based on the search history data;
FIG. 8 is a flowchart illustrating the flow of redistribution plan generation processing;
FIG. 9 is a flowchart illustrating the flow of redistribution plan modification processing out of the redistribution plan generation processing;
FIG. 10 is a flowchart illustrating another example of user model generation processing; and
FIG. 11A and FIG. 11B are diagrams illustrating a problem in an on-demand type mobility service.

### DESCRIPTION OF THE EMBODIMENTS

### (First Embodiment)

A first embodiment of the present invention is described below. The first embodiment is a redistribution plan generation server in a car sharing system. The server has a function of predicting the demand in the car sharing system, a redistribution plan generation function based on the demand prediction, and a function of generating and updating a user model for the demand prediction.

### Car Sharing System

First, the car sharing system supposed in this embodiment is briefly described. The car sharing system in this embodiment is a one-way type (drop-off type) car sharing system that requires a reservation at the time of use. A station (departure station) at which a vehicle (shared car) is rented and a station (destination station) at which the vehicle is returned may be different from each other because the car sharing system is a one-way type system.

The reservation is possible when there is a usable vehicle at the departure station and there is an empty spot (parking space) at the destination station. In this embodiment, reserved vehicles and spots are not lent to other users until the use according to the reservation ends.

A reservation system as above is supposed, and hence the time at which the acceptance of the reservation begins is limited to a time after a predetermined period before the use time (for example, after 30 minutes before the use time, after one hour before the use time, and the like) in the car sharing system in this embodiment. This is for avoiding opportunity loss of use for other users caused by the reservation.

In the car sharing system as above, it is considered that the user performs a search before the period in which reservation is possible and checks whether there is a usable vehicle at the departure station and whether there is an empty spot at the destination station. This is because the user can judge that travel using a shared car is possible when reservation seems to be possible even if the reservation cannot be performed at the time point.

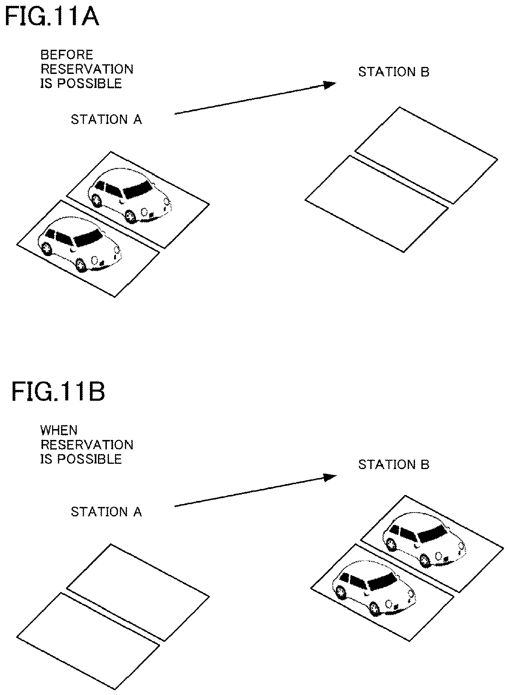

The car sharing system as above has problems as follows. For example, a situation is supposed in which a user desires to move from a station A to a station B and performs a search before the reservation begins, to thereby find that the number of empty vehicles at the station A and the number of empty spots at the station B are sufficient as illustrated in FIG. 11A. Then, the user expects that travel using a shared car is possible. However, there may be a situation in which the user cannot move from the station A to the station B because there are no empty vehicles at the station A or there are no empty spots at the station B at a time point at which reservation is possible or at a time point at which the user desires travel as illustrated in FIG. 11B. This is inconvenient for the user, and causes opportunity loss for an operator of the car sharing system.

In order to avoid problems as above, there is a need to grasp the demand from the abovementioned user for the travel from the station A to the station B, and properly perform redistribution by supplying shared cars to the station A and increasing empty spots at the station B by removing shared cars.

In general, the demand prediction is performed in accordance with past tendencies (see Japanese Patent Application Laid-open No. 2015-026136). In a service in which the total amount of demands is large, fluctuation and variation among the demands are small. Therefore, a relatively accurate prediction can be performed. However, prediction cannot be performed with such a high accuracy from the past tendencies in an on-demand service in which the total amount of demands is small and the fluctuation is large, that is, the randomness is high.

The inventor of the present invention has found that the future demand can be predicted on the basis of a search behavior of the user by focusing on a feature in which the user performs a search before the reservation is possible in the abovementioned car sharing system. For example, in the abovementioned example of FIG. 11A and FIG. 11B, the fear of opportunity loss can be prevented by determining, at a time point at which the user first performs a search relating to travel from the station A to the station B (before the period in which reservation is possible), by a management server that the travel is likely to be performed and generating an appropriate redistribution plan.

### System Configuration

A redistribution plan generation server 100 of the car sharing system in this embodiment is described below with reference to the drawings. In the car sharing system in this embodiment, the reservation is possible from 30 minutes before the beginning of use. In the operation of the car sharing system, a reservation management server is necessary besides the redistribution plan generation server 100. The reservation management server is a server that presents search results of the availability in accordance with the search by the user and processes a reservation request from the user. The reservation management server is well known, and hence detailed description thereof is omitted in this disclosure.

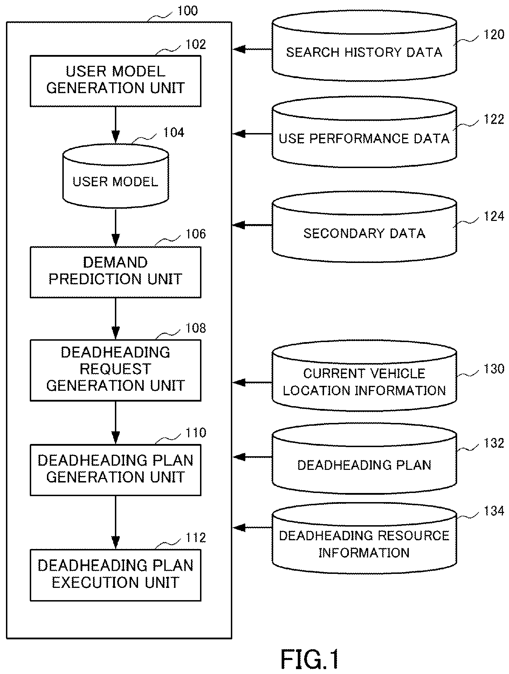

FIG. 1 is a functional block diagram of the server 100. The server 100 includes a processor such as a CPU, and a memory that stores therein applications and programs of an OS, and provides functions as described below when the processor executes the programs. That is, the server 100 provides functions of a user model generation unit 102, a user model storage unit 104, a demand prediction unit 106, a redistribution request generation unit 108, a redistribution plan generation unit 110, and a redistribution plan execution unit 112.

The server 100 may include a plurality of processors. The functions of the server 100 may be provided by causing a plurality of computers to be in cooperation with each other. A part or all of the abovementioned functions may be provided by a hardware circuit such as an ASIC or an FPGA.

The functions included in the server 100 are described below. The functions of the server 100 can be roughly classified into three, that is, user model generation, demand prediction, and redistribution plan generation, and hence each of the above is described.

### User Model Generation Function

A user model generation unit 102 generates a user model on the basis of search history data 120 and use performance data 122. The user model is a model to which a difference between a timing at which the user performs the search and a timing at which the actual travel is desired to begin is associated. For example, a user who has a tendency of intermittently performing a search for checking the availability at a time point long before (for example, two hours before) the timing at which reservation becomes possible, and performs reservation at the time point at which the reservation becomes possible is supposed. Then, it can be determined that there is a demand for travel two hours after the first search for the user. The actual search tendency differs for each user in various manners, but the way the user performs the search can be determined when the frequency of use is higher than a certain level. Therefore, a user model for estimating the travel beginning time from the search behavior can be generated.

The user model generation unit 102 acquires the search history data 120 and the use performance data 122 from the reservation management server (not shown), and generates a user model on the basis of the data.

The search history data 120 includes the search time, the place of departure, the destination, the result thereof (whether there is vacancy), and whether the reservation is executed relating to the search that the user has performed in the past with respect to the reservation management server. As described above, the place of departure and the destination are included as search conditions in the search with respect to the reservation management server, and can be grasped by the reservation management server. The time at which the search has been performed, the search result, and whether the reservation is executed can be similarly grasped by the reservation management server.

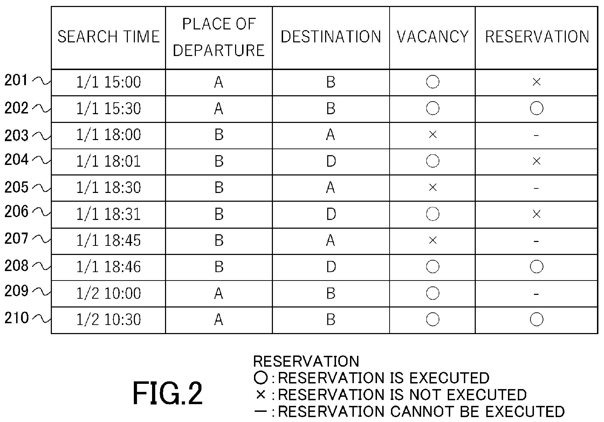

FIG. 2 exemplifies a part of the search history data of one user. A record 201 indicates that a search in which the station A is set as the place of departure and the station B is set as the destination is performed at 15:00 on January 1, and a search result indicating that there is vacancy is acquired. In the last column of "reservation", "o" indicates that the reservation is possible and is executed, "x" indicates that the reservation is possible but is not executed, and "-" indicates that the reservation is not possible (e.g. no vacancy). In the example of the first row, the reservation is possible but is not executed, and it can be estimated that the search is performed before the period in which reservation is possible.

A record 202 indicates that a search in which the station A is set as the place of departure and the station B is set as the destination is performed again at 15:30 on January 1. Here, it means that a search result indicating that there is vacancy is acquired and that an actual reservation is performed.

A record 203 indicates that a search relating to travel from the station B to the station A is performed and a search result indicating that there is no vacancy is acquired. A record 204 indicates that a search relating to travel from the station B to a station D is performed immediately after the search and that a search result indicating that there is vacancy is acquired but the reservation is not performed. Records 205 and 206 indicates that a search similar to those in the records 203 and 204 is performed 30 minutes later, and the acquired search results and whether the reservation are executed are similar to the above. Records 207 and 208 indicate that a similar search is performed 15 minutes later, and the search results are similar to those as above, but the user reserves the travel from the station B to the station D. From the records 203 to 208, it can be understood that the first choice of the user is the travel from the station B to the station A, but the user has chosen travel to the station D as an alternative.

A record 209 and a record 210 are similar to the records 201 and 202.

The use performance data 122 is data indicating a performance (history) relating to the use of the shared car, and includes the use beginning time, the place of departure, the destination, and the time of reservation. The use performance data 122 may be generated from the content of the reservation for the reservation management server, or may be generated on the basis of information acquired from a management server that manages the actual lending and returning. The use performance data 122 may include information other than the above and may include information on the return time of the vehicle, for example.

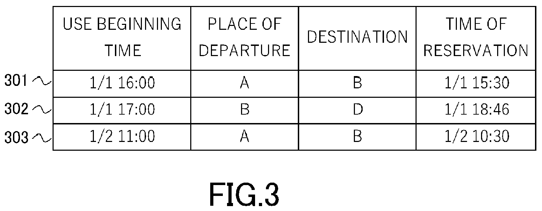

FIG. 3 exemplifies a part of the use performance data of one user. The use performance data shown in FIG. 3 is data corresponding to the search history data shown in FIG. 2. In the example, it can be understood that the reservation is performed at the time at which the reservation becomes possible (30 minutes before the beginning of use) for the travel from the station A to the station B (records 301 and 303), and that the reservation is performed after the time at which the reservation becomes possible for the travel from the station B to the station D (record 302).

Note that both the search history data 120 and the use performance data 122 shown in FIG. 2 and FIG. 3 are for one user, and is a part of the data. In reality, there are a large number of search histories and use performances for a large number of users.

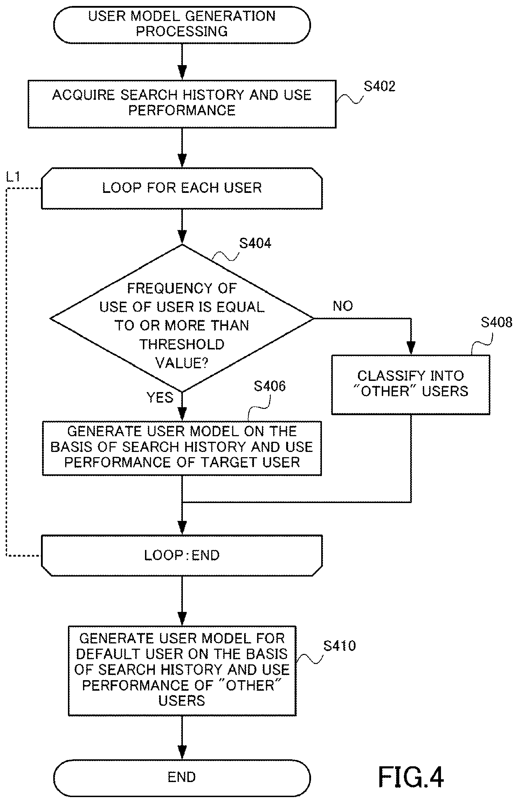

User model generation processing in the user model generation unit 102 is described with reference to FIG. 4.

First, in Step S402, the user model generation unit 102 acquires the search history data 120 and the use performance data 122. The search history data 120 and the use performance data 122 acquired here only needs to be history data relating to the search and the reservation of which use is already definite. That is, in the user model generation processing, the latest history data is not necessarily needed.

Processing of a loop L1 is executed for each user. In Step S404, the user model generation unit 102 determines whether the frequency of use of a target user is equal to or more than a threshold value. The threshold value is preferably a value (frequency of use) that is set in advance as a frequency of use that enables the determination that an accurate user model can be generated. When the frequency of use is equal to or more than the threshold value (S404-YES), the processing proceeds to Step S406. When the frequency of use is less than the threshold value (S404-NO), the processing proceeds to Step S408.

In Step S406, the user model generation unit 102 generates a user model on the basis of the search history data 120 and the use performance data 122. The user model is a model in which the timing at which the user performs the search and the actual travel beginning time are associated with each other. For example, one user model is a model indicating a user that begins the search one hour before the beginning of use and makes a reservation by performing the search again at the time at which reservation becomes possible. Another model is a model indicating a user that begins the search two hours before the beginning of use and makes a reservation by performing the search again at the time at which reservation becomes possible. Another model is a model indicating a user that performs the search and the reservation at or after the time at which reservation becomes possible. Yet another model is a model indicating a user that performs the search and the reservation only immediately before the beginning of use. On the assumption that the search behavior does not necessarily lead to reservation (use), the user model may indicate the rate of the search behavior that leads to reservation.

The user model generation unit 102 can determine a user model of a target user by applying statistical processing on the search history data 120 and the use performance data 122 relating to the target user. Alternatively, the user model generation unit 102 can determine a user model of a target user by performing machine learning based on the search history data 120 and the use performance data 122 relating to the target user.

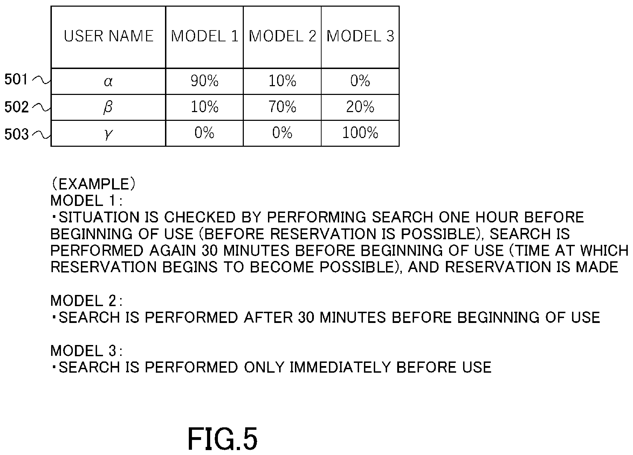

The user model generation unit 102 does not necessarily need to associate one user model to one user, and may associate a plurality of user models to one user. For example, as illustrated in FIG. 5, the probability of the plurality of user models applying to the users may be determined for each user. In the example of FIG. 5, it is determined that a user α behaves in accordance to a user model 1 at a probability of 90%, and behaves in accordance to a user model 2 at a probability of 10% (record 501). Similarly, it is determined that a user β behaves in accordance to the user models 1 and 2 and a user model 3 at probabilities of 10%, 70%, and 20%, respectively, and a user γ always behaves in accordance to the user model 3 (records 502 and 503).

Step S408 is processing performed when the frequency of use of the user is less than the threshold value. In Step S408, the user model generation unit 102 classifies the target user into "other" users, and does not generate a user model based on the search history and the use performance solely for the user.

The processing of the loop L1 including Step S404 to Step S408 is performed for all users. After the loop L1 ends, the user models (see FIG. 5) are generated for the users of which frequency of use is equal to or more than the threshold value.

In Step S410, the user model generation unit 102 generates a user model on the basis of the search history data 120 and the use performance data 122 of the "other" users of which frequency of use is lower than the threshold value. The processing of generating the user models itself is similar to that in Step S406, and hence repetitive descriptions are omitted. The user model generated here is a user model (default user model) that can be applied to users without sufficient data. In terms of the above, the user model generation unit 102 may generate a user model for the "other" users by also taking into consideration, in Step S410, a part or all of the history information of the users of which frequency of use is equal to or more than the threshold value.

By the processing above, the user model generation processing by the user model generation unit 102 ends. The user model generation unit 102 stores the generated user model in the user model storage unit 104 in association with the user.

### Demand Prediction Function

The demand prediction unit 106 predicts a future demand in the car sharing system. The prediction in this embodiment includes at least one of the departure station or the destination station of the travel, and the beginning time of the travel.

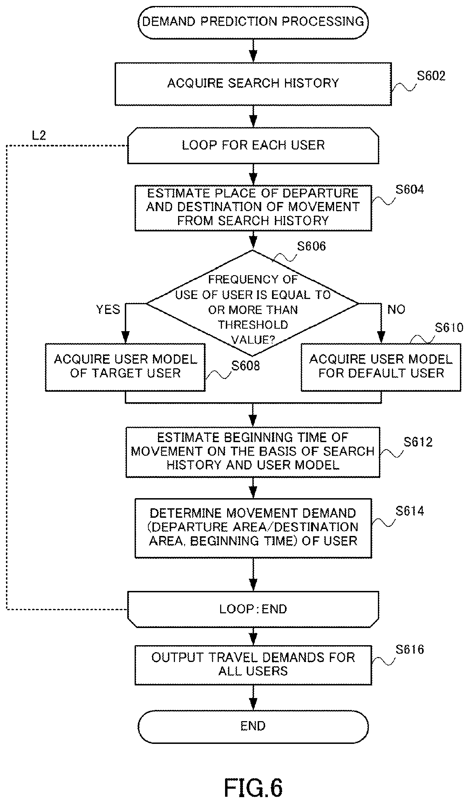

FIG. 6 is a flowchart illustrating the flow of demand prediction processing by the demand prediction unit 106. The demand prediction processing by the demand prediction unit 106 is described below in accordance with the flowchart of FIG. 6.

First, in Step S602, the demand prediction unit 106 acquires the search history data 120. It is possible for the search history data 120 acquired here to only be history data relating to a search of which use is not defined. That is, in the demand prediction processing, only the search history data within the latest predetermined period needs to be used.

Processing of a loop L2 is executed for each user. In Step S604, the demand prediction unit 106 estimates the place of departure and the destination of the travel desired by the target user from the search history data 120 of the target user. The demand prediction unit 106 that executes the processing in Step S604 corresponds to first estimator of the present invention.

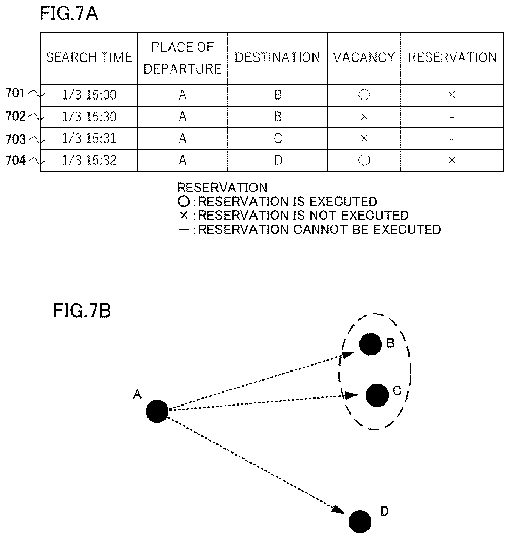

For example, a situation in which a target user performs a search as shown in FIG. 7A is supposed. Specifically, the user searches the travel from the station A to the station B at the time point of 15:00. The user acquires a result that there is availability, but does not make a reservation and does not perform any other search immediately after the search. At the time point of 15:30 after a little time has elapsed, the user searches the travel from the station A to the station B again. The user receives a result that there is no vacancy, and performs a search from the station A to the station C immediately after receiving the result. The user receives a result that there is also no vacancy for the travel, and further searches the travel from the station A to the station D. The user obtains a search result indicating that there is vacancy but does not make a reservation.

The positional relationship between the stations A to D as illustrated in FIG. 7B. The place of departure of the travel desired by the user can be estimated to be the station A because the place of departure in the plurality of search conditions is the station A. The destination of the travel desired by the user can be estimated to be the station B because a further search is not performed at the time point of 15:00 at which there is vacancy in the travel to the station B and a search in which the stations C and D close to the station B are set as destinations is performed at the time point of 15:30 at which there is no vacancy in the travel in the station B. Therefore, in this example, it can be estimated that the user desires the travel from the station A to the station B.

The estimation of the place of departure and the destination as above can be performed by procedures as follows. A simple approach is to perform estimation on the basis of the number of times the place of departure and the destination are designated in the search history data 120. In the example of FIG. 7A, the station A can be estimated to be the place of departure because the station A is designated as the place of departure by the largest number of times (four times), and the station B can be estimated to be the destination because the station B is designated as the destination by the largest number of times (twice).

Another approach is to perform estimation on the basis of the weighted number of times of the place of departure and the destination designated in the search history data 120. In the approach, among the places of departure and the destinations designated in searches in a chronological sequence, a larger weighted number of times is applied to the places of departure and the destinations of which search time is earlier. First, the demand prediction unit 106 classifies the plurality of searches into search groups in a chronological sequence. The classification may be performed by classifying a plurality of searches having intervals that are each a predetermined period or less therebetween, or may be performed with use of a clustering approach, for example. The demand prediction unit 106 determines the weighted number of times so that places of which search time is earlier in the search group are applied with a heavier weight. In the example of FIG. 7A, one search at 15:00 and the three searches from 15:30 to 15:32 are determined to be in one search group. The search in which the destination is the station B is the first search in the search group, and hence the weighted number of times is counted as once, for example. For the second search and searches thereafter in the group, the weighted number of times is counted as 0.9 times, 0.8 times, 0.7 times, and so on, for example. The demand prediction unit 106 can determine the place of departure and the destination of which weighted number of times is the largest as the place of departure and the destination desired by the user.

The place of departure and the destination do not necessarily need to be determined in units of stations, and may be determined as wider regions. For example, in the example of FIG. 7A and FIG. 7B, the destination area may be determined as an area including the station B and the station C. Both the place of departure and the destination are estimated here, but it is possible to estimate only one of the place of departure and the destination.

In Step S606, the demand prediction unit 106 determines whether the frequency of use of the car sharing system of the target user is equal to or more than a threshold value. The threshold value may be the same as or different from the threshold value in the user model generation processing (Step S404 in FIG. 4). The use performance data 122 of a relatively long period of time is necessary in order to determine the frequency of use of the user. However, the determination in Step S606 does not necessarily need to be performed on the basis of the use performance data 122. Member information including information on the frequency of use computed in advance may be acquired, and the determination may be performed on the basis of the member information. The processing proceeds to Step S608 when the frequency of use of the target user is equal to or more than the threshold value (S606-YES), and the processing proceeds to Step S610 otherwise.

In Step S608, the demand prediction unit 106 acquires a user model corresponding to the target user from the user model storage unit 104. Meanwhile, in Step S610, the demand prediction unit 106 acquires the user model for a default user (the user model generated in Step S410 in FIG. 4) from the user model storage unit 104. The processing in Step S606 to Step S610 may be as follows. That is, the processing determines whether there is a user model corresponding to the user in the user model storage unit 104. The user model is acquired when there is a user model as above, and the default user model is acquired when there is no user model as above.

In Step S612, the demand prediction unit 106 estimates the beginning time of the travel desired by the target user on the basis of the search history data 120 of the target user and the acquired user model. The demand prediction unit 106 that executes the processing in Step S612 corresponds to second estimator of the present invention.

When the target user and the user model correspond to each other on a one-to-one basis, the demand prediction unit 106 estimates the time defined in the user model to be the travel beginning time of the user. For example, when the target user only has a user model in which travel begins one hour after a search, the demand prediction unit 106 estimates the time that is one hour after the earliest search to be the travel beginning time of the user.

When a plurality of user models correspond to the target user, the demand prediction unit 106 estimates the travel beginning time of the user that takes those plurality of user models into consideration. For example, a user to which the user model 1 in which the travel begins one hour after the search applies by a probability of 70% and the user model 2 in which the travel begins two hours after the search applies by a probability of 30% is supposed. In that case, the demand prediction unit 106 may estimate, for example, the travel beginning time in accordance with the probability, that is, estimate the travel beginning time to be one hour after the earliest search by a probability of 70% and estimate the travel beginning time to be two hours after the earliest search by a probability of 30%. Alternatively, the demand prediction unit 106 may estimate the time that is one hour after the earliest search to be the travel beginning time in accordance with the user model 1 having the highest probability. The demand prediction unit 106 may estimate that there is a demand in accordance with the probability, that is, may estimate that there is a demand for beginning the travel one hour after the earliest search 0.7 times (for 0.7 people) and that there is a demand for beginning the travel two hours after the earliest search 0.3 times (for 0.3 people). The demand prediction unit 106 may select and use any one of user models on the basis of a machine learning result based on secondary data and other information.

By the processing above, the place of departure and the destination of the travel and the travel beginning time that are desired can be estimated for one user. In Step S614, the demand prediction unit 106 determines the travel demand from the target user, and stores the travel demand in the memory.

By performing the processing of the loop L2 for all the users, the demand prediction unit 106 can determine the travel demand for all the users. In Step S618, the demand prediction unit 106 outputs the travel demands for all the users determined as above to the redistribution request generation unit 108.

### Redistribution Plan Generation Processing

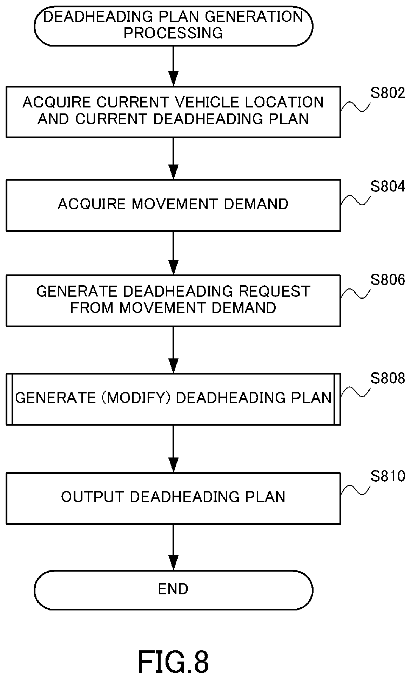

Redistribution plan generation processing is described with reference to a flowchart in FIG. 8. A redistribution plan is a plan for adjusting the location of a vehicle, and typically means a relocation of a vehicle manually performed by a worker, but may also include a relocation of a vehicle by the user by providing incentive. When the vehicle is a vehicle that can be autonomously driven, the vehicle may be relocated through autonomous driving.

In Step S802, the redistribution request generation unit 108 acquires current vehicle location information 130 and a current redistribution plan 132. The current vehicle location information 130 and the current redistribution plan 132 can be acquired from a management server that manages the car sharing system.

In Step S804, the redistribution request generation unit 108 acquires a travel demand predicted by the demand prediction unit 106. As described above, the travel demand includes the place of departure and the destination of the travel and the travel beginning time desired by the user.

In Step S806, the redistribution request generation unit 108 generates a redistribution request by aggregating the travel demands. The redistribution request generation unit 108 specifies a travel demand that cannot be realized with the current vehicle location and the redistribution plan, and determines a request for meeting the travel demand as a redistribution request. The redistribution request includes a request for increasing the number of vehicles at the station A by one vehicle by a time T, and a request for increasing the empty spots at the station B by one empty spot by the time T, for example. The generated redistribution request is output to the redistribution plan generation unit 110.

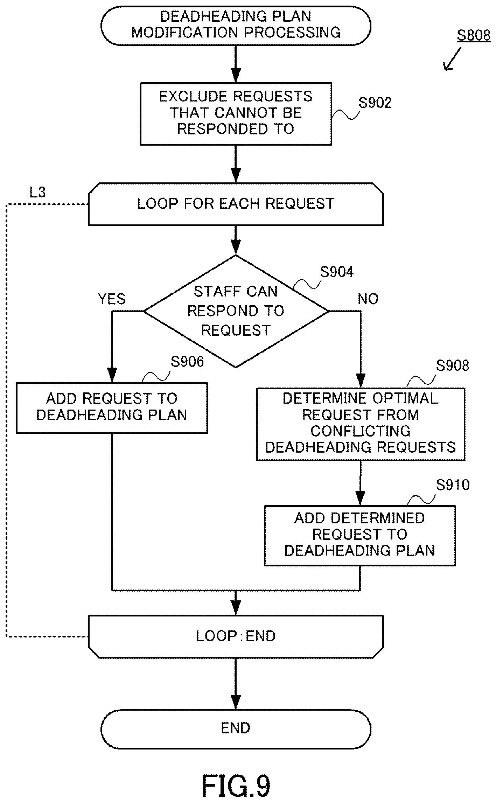

The redistribution plan generation unit 110 generates a new redistribution plan by modifying the current redistribution plan on the basis of the redistribution request, the current vehicle location information 130, the current redistribution plan 132, and redistribution resource information 134. Specifically, the redistribution plan generation unit 110 generates a redistribution plan by performing redistribution plan modification processing illustrated in a flowchart in FIG. 9.

First, in Step S902, the redistribution plan generation unit 110 excludes requests that cannot be responded to. Specifically, the redistribution plan generation unit 110 excludes requests relating to redistribution within a predetermined period from the examination beginning time (current time). The predetermined period is a period needed to prepare for the execution of the redistribution plan, and typically is a period obtained by adding a period needed to calculate (compute) the redistribution plan and a period needed to prepare for a redistribution staff.

Processing of a loop L3 is executed for each request after the exclusion processing in Step S902.

In Step S904, the redistribution plan generation unit 110 checks whether the staff can respond to the request with reference to the current redistribution plan 132. Specifically, the redistribution plan generation unit 110 checks whether the time zone requested by the request is a time zone in which the staff can work. It is desired that whether the staff can respond to the request be determined by taking into consideration not only the time zone necessary for the redistribution but also plans before and after the time zone.

When the request can be responded to (S904-YES), the processing proceeds to Step S906. In Step S906, the redistribution plan generation unit 110 adds the request to the redistribution plan.

When the request cannot be responded to (S904-NO), the processing proceeds to Step S908. In Step S908, the redistribution plan generation unit 110 determines an optimal request out of conflicting requests. The criterion of being "optimal" may be determined, as appropriate, in accordance to a system request. For example, profits, the service rate, and the like may be used. Approaches of determining an optimal request include determination by optimized calculation such as linear programming and integer programming, determination based on simulation, and rule-based determination, for example. In Step S910, the redistribution plan generation unit 110 adds the optimal request to the redistribution plan, and excludes requests conflicting with the request from the redistribution plan.

The generation of a new redistribution plan is completed by performing the processing above for all the requests.

The processing described herein is a simplified approach focused on calculation speed, and an optimal redistribution plan is not always acquired. When more importance is placed on accuracy, optimized calculation taking all of the current state and the predicted travel demands into consideration only needs to be performed. However, in general, the calculation amount becomes massive when the number of variables increases in optimized calculation. Therefore, in this embodiment, a simplified and high-speed approach as described above is employed.

The description returns to the description of FIG. 8. When a new redistribution plan is generated, the redistribution plan execution unit 112 outputs a redistribution execution command to the redistribution staff at an appropriate timing for the staff to change the behavior in Step S810.

### Advantageous Effect of This Embodiment

According to this embodiment, the travel demand from the user can be predicted on the basis of the search history of the user, and the redistribution plan for responding to the predicted travel demand can be generated and executed.

This embodiment predicts the demand on the basis of the search behavior relating to the travel to be performed, and hence can perform prediction with high accuracy. This is based on the features in which the behaviors of the users are predicted and in which the current search behavior is likely to directly lead to the future travel demand. The approach of the related art regards the users as a set and predicts the rate of the users that move from a spot A to a spot B. However, variation inevitably occurs in the prediction as above, and an accurate prediction cannot be performed in a service with a large demand fluctuation. That is, by the approach of this embodiment, demand prediction with an accuracy higher than that of the related art can be performed. A redistribution plan that can meet the user demand more can be generated by generating the redistribution plan on the basis of the demand prediction as above.

### (Second Embodiment)

In the first embodiment, only the search conditions (the place of departure and the destination) and the search time included in the search history and the use beginning time included in the use performance are used in the prediction of the place of departure and the destination of the travel and the travel beginning time. However, the place of departure and the destination of the travel and the travel beginning time may be predicted with use of information other than the above.

The demand prediction unit 106 may use secondary data such as a meteorological condition at the time of the search or use, a combination of the place of departure and the destination, and the time (the time zone and the day of week) at which the search is executed in the prediction, for example. For example, the prediction can be performed more appropriately by taking the weather into consideration for a user whose behavior tendency differs between a day of bad weather and a day of good weather. Similarly, the prediction can be performed more appropriately by taking the day and time of the search into consideration for a user whose behavior tendency differs depending on the time zone or the day of week of the search. The prediction may be performed by taking the place of departure and the destination in the search into consideration. For example, some users perform the search immediately before the use for a travel zone that the user regularly uses, and perform the search long before the beginning of the use for a travel zone that the user does not regularly use. For such users, prediction can be performed with more accuracy by using user models that differ depending on the place of departure and the destination included in the search condition.

In this embodiment, the user model generation unit 102 generates a user model for at least one of the meteorological condition at the time of the search or use, the combination of the place of departure and the destination, and the time at which the search is executed for each user. In Step S608, the demand prediction unit 106 selects a user model to be used in the demand prediction by taking the elements above into consideration.

According to this embodiment, the demand prediction can be performed with use of a user model that takes the secondary data into consideration, and hence the prediction can be performed with an accuracy even higher than that of the first embodiment.

### (Third Embodiment)

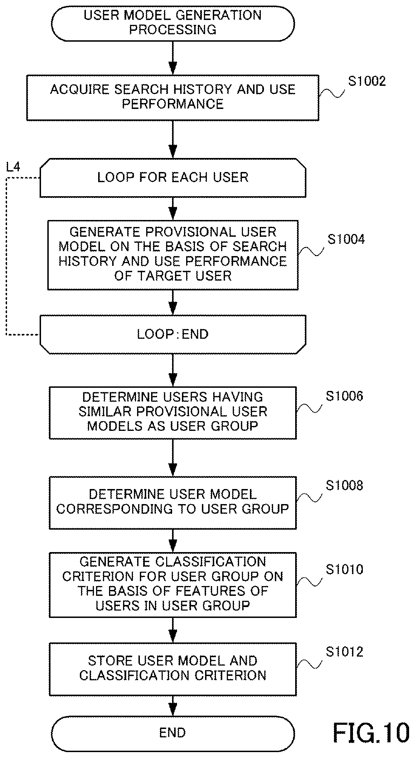

In the embodiment described above, the user model is basically determined for each user. In this embodiment, the user model is determined for a plurality of users (user group). FIG. 10 is a flowchart illustrating the user model generation processing in this embodiment.

The user model generation unit 102 in this embodiment acquires the search history and the use performance (S1002), and generates a provisional user model for each user (S1004). The processing is basically similar to the processing in the first embodiment. In this embodiment, the provisional user model is generated regardless of the frequency of use of the user, but it is possible go generate the provisional user model only for the user of whom frequency of use is equal to or more than a threshold value as in the first embodiment.

Next, the user model generation unit 102 determines a plurality of users having a common tendency of search as a user group (S1006). That is, the user model generation unit 102 aggregates a plurality of users having similar provisional user models into one group. The user model generation unit 102 determines a user model corresponding to the user group (S1008). When there is a difference between the provisional user models in the user group, one user model may be defined for the user group by averaging the provisional user models, for example. In this way, the number of the user models to be stored can be reduced.

The user model generation unit 102 generates a classification criterion for acquiring a user group by extracting a feature common to the users in the user group (S1010). It is desired that the feature used in the classification of the user group be a feature based on at least one of the attribute, the search history, or the use performance of the user. By acquiring a classification criterion that defines a user feature for each user group as above, demand prediction in which a user model unique to a user is applied can be performed also for a user of whom frequency of use is low. The user feature may include any one of the meteorological situation at the time of the search or use, the combination of the place of departure and the destination, and the time zone in which the search is executed.

In this embodiment, the user model generation unit 102 stores the user model in the user model storage unit 104 in association with the user group (S1012). The demand prediction unit 106 also stores the classification criterion for the user determined above in the storage unit.

The demand prediction processing in this embodiment is basically similar to that in the first embodiment (FIG. 6). In this embodiment, in Step S608, the demand prediction unit 106 specifies the user group of the target user on the basis of the attribute, the search history, and the use performance of the target user, and the classification criterion, and acquires a user model associated to the specified user group from the user model storage unit 104.

In this embodiment, the selection of the user model in accordance with the frequency of use of the user (S606 to S610) does not necessarily need to be performed. For example, when there is a high probability that any one of existing user groups applies to the target user, the demand prediction unit 106 may use the user model of the corresponding user group, and may use the user model for a default user otherwise.

### (Fourth Embodiment)

This embodiment includes an updater that updates the user model in addition to the configuration of the embodiment described above. The updater updates the user model on the basis of the search history and the use performance after the user model generation unit 102 generates the user model.

The following two approaches are conceivable for the update of the user model. One approach is to change the assigned probability of the models for each user (or user group). For example, in FIG. 5, the user α has a 90% probability of corresponding to the model 1, and a 10% probability of corresponding to the model 2. The processing of updating the probability for the model 1 to 95% and the probability for the model 2 to 5% corresponds to the first updating method.

The second approach is to change the behavior tendency in the model. For example, the model 1 in FIG. 5 begins using the system one hour after the search. The processing of updating the model 1 to begin using the system 50 minutes after the search corresponds to the second updating approach.

Only one of those two updating approaches may be employed, or both may be employed.

As described above, by updating the user model each time the search history and the use performance increase, a user model in which the use tendency of the user is reflected with more fidelity can be generated and the user demand can be predicted more accurately.

### (Fifth Embodiment)

In the first embodiment, the generation of the user model, the prediction of the demand, and the generation of the redistribution plan based on the demand prediction are realized by one server. However, those functions may be executed independently.

For example, the generation of the user model may be performed by another apparatus (user model generation apparatus) and the demand prediction and the redistribution plan generation based on the generated user model may be performed by another apparatus. The user model itself is information with high utility value, and hence the present invention can be regarded as a user model generation apparatus.

The travel demand prediction of the user itself is also information with high utility value, and hence the present invention can be regarded as a demand prediction apparatus. As described above, the user model itself does not necessarily need to be generated by the demand prediction apparatus, and a user model generated by another apparatus may be acquired and used. The predicted travel demand may be utilized in purposes other than redistribution.

### (Sixth Embodiment)

In the description above, the redistribution plan generation server in the car sharing system has been described, but the present invention is not limited to be applied to the car sharing system. The present invention can be applied to on-demand type mobility services in general.

The on-demand type mobility service is a service that provides travel means to a user in accordance with a request from the user. Examples of the on-demand type mobility service include a reservation-type share taxi, an on-demand bus (including not only an area-type bus but also a bypass-type bus), and the like. All of the services above have a common feature in that the services are used by the user by making a reservation and the user cannot receive the service without sufficient travel resources. In the on-demand type mobility services as above, the user demand can be properly answered by predicting the user demand and properly placing the travel resources in accordance the prediction.

### (Other Embodiments)

The embodiments described above are merely examples, the plurality of embodiments may be carried out in combination, and the present invention may be embodied while making modifications, as appropriate, without departing from the gist of the present invention.

The demand prediction apparatus, the user model generation apparatus, and the redistribution plan generation apparatus in the abovementioned embodiments can be regarded as independent inventions. The demand prediction apparatus predicts the travel demand in the mobility service, but the prediction result may be used for purposes other than the redistribution plan generation in the mobility service. For example, the result of the demand prediction by the car sharing system may be used in other mobility services (for example, railways). This is because a user that arrives at a station of a railway with use of the car sharing system may be a demand in a railway service. The user model generation apparatus is also useful by itself. This is because the behavior of the user can be predicted according to the user model in this disclosure.

A demand prediction apparatus configured to predict a demand in a mobility service, comprises a history acquirer configured to acquire a search history including a condition of a search, which includes a place of departure and a destination, and a time at which the search has been performed; a first estimator configured to estimate at least one of a departure area or a destination area of a travel; a second estimator configured to estimate a beginning time of the travel on the basis of the search history and a user model that defines a difference between the time at which the search has been performed and an actual beginning time of the travel; and a demand predictor configured to predict that the user makes travel specified by the departure area or the destination area estimated by the first estimator at the beginning time of the travel estimated by the second estimator.

## Claims

1. A demand prediction apparatus configured to predict a demand in a mobility service, the demand prediction apparatus comprising:
a history acquirer configured to acquire a search history including a condition of a search, which has been performed by a user and which includes a place of departure and a destination, and a time at which the search has been performed;
a first estimator configured to estimate, from the search history, at least one of a departure area or a destination area of a travel desired by the user;
a second estimator configured to estimate a beginning time of the travel desired by the user on the basis of the search history and a user model that defines a difference between the time at which the search has been performed and an actual beginning time of the travel; and
a demand predictor configured to predict that the user makes travel specified by the departure area or the destination area estimated by the first estimator at the beginning time of the travel estimated by the second estimator.

2. The demand prediction apparatus according to claim 1, further comprising:
a storage unit configured to store a plurality of the user models in association with the user; and
a user model selector configured to select one of the user models associated with the user.

3. The demand prediction apparatus according to claim 1, further comprising:
a storage unit configured to store a plurality of the user models in association with a user group; and
a user model selector configured to determine a user group corresponding to the user on the basis of at least one of an attribute, a search history, or a use performance of the user, and select one of the user models associated with the user group, wherein
the second estimator is configured to estimate the beginning time of the travel desired by the user with use of the user model selected by the user model selector.

4. The demand prediction apparatus according to claim 2 or 3, wherein the user model selector is configured to select a predetermined user model out of the plurality of user models when a frequency of use of the user is lower than a threshold value.

5. The demand prediction apparatus according to any one of claims 2 to 4, wherein the user model selector is configured to select a user model corresponding to the user by also taking into consideration at least one of a meteorological condition at a time of search or use, a combination of the departure area and the destination area, and a time at which the search is executed.

6. The demand prediction apparatus according to any one of claims 2 to 5, further comprising an updater configured to acquire a plurality of search histories and use performances and update at least one of the plurality of user models stored in the storage unit.

7. The demand prediction apparatus according to any one of claims 1 to 6, wherein
the first estimator is configured to estimate the departure area or the destination area of the movement desired by the user on the basis of a weighed number of times the place of departure and the destination are designated in a chronological sequence of searches, and
a weight in the weighed number of times becomes heavier as a search time in the series of searches becomes earlier.

8. A redistribution plan generation apparatus, comprising:
the demand prediction apparatus according to any one of claims 1 to 7; and
a plan generator configured to generate a redistribution plan for relocating a travel resource in the mobility service on the basis of a demand predicted by the demand prediction apparatus, a location of the travel resource, and a current redistribution plan.

9. The redistribution plan generation apparatus according to claim 8, wherein the plan generator is configured to generate a redistribution plan by:
generating one or a plurality of redistribution requests on the basis of the demand predicted by the demand prediction apparatus, the location of the travel resource in the mobility service, and the current redistribution plan;
adding, to a new redistribution plan, a redistribution request that is executable without conflicting with other requests out of the one or a plurality of redistribution requests; and
selecting, for redistribution requests that conflict with other requests out of the one or a plurality of redistribution requests, an optimal redistribution request on the basis of a predetermined criterion, and adding the optimal redistribution request to the new redistribution plan.

10. A user model generation apparatus, comprising:
a history acquirer configured to acquire a search history including a time at which a user has performed a search in a mobility service, for a plurality of the users;
a performance acquirer configured to acquire a use performance including a time at which the user has begun using the mobility service; and
a generator configured to generate a user model that defines a time from when the user performs the search to when the user begins using the mobility service on the basis of the search history and the use performance.

11. The user model generation apparatus according to claim 10, wherein the generator is configured to generate the user model for each of the users on the basis of the search history and the use performance of the user.

12. The user model generation apparatus according to claim 10, wherein the generator is configured to:
generate a provisional user model for each of the users on the basis of the search history and the use performance of the user;
aggregate users having similar provisional user models into a user group; and
generate a user model for each user group and a classification criterion for the user group.

13. The user model generation apparatus according to any one of claims 10 to 12, wherein the generator is configured to generate one user model on the basis of the search history and the use performance of a user of whom frequency of use is lower than a threshold value.

14. The user model generation apparatus according to any one of claims 10 to 13, wherein the generator is configured to generate the user model by also taking into consideration at least one of a meteorological condition at a time of search or use, a combination of a departure area and a destination area, and a time at which the search is executed.

15. The user model generation apparatus according to any one of claims 10 to 14, further comprising an updater configured to update the user model on the basis of the search history and the use performance that are not used when the user model is generated.
